# EUROPÄISCHE PATENTSCHRIFT

(11) **EP 3 708 276 B1**
(45) Veröffentlichungstag und Bekanntmachung des Hinweises auf die Patenterteilung: **18.10.2023**
(21) Anmeldenummer: 20162640.5
(22) Anmeldetag: 12.03.2020
(51) Int. Cl.: B22F 7/08, C22C 1/04, C22C 1/05, C22C 32/00, F16D 69/02, B22F 1/10, F16D 13/64

(54) **REIBBELAG**
FRICTION LINING
DOUBLURE DE FRICTION

(30) Priorität: 13.03.2019 AT 502202019
(43) Veröffentlichungstag der Anmeldung: 16.09.2020
(73) Patentinhaber: Miba Frictec GmbH, 4663 Laakirchen (AT)
(72) Erfinder: MÜHLEGGER, Markus, 4812 Pinsdorf (AT)
(74) Vertreter: Burger, Hannes

(56) Entgegenhaltungen:
- WO-A1-2018/185944
- JP-A- H 093 564
- JP-A- S60 106 932
- US-A- 5 339 931
- US-A1- 2009 236 191
- US-A1- 2018 306 263

## Beschreibung

Die Erfindung betrifft einen von organischen Harzen als Bindemittel freien, gesinterten Reibbelag mit einem Reibbelagskörper gemäß dem unabhängigen Anspruch 1.

Die weiteren Ausführungsformen der Erfindung betreffen ein Reibbauteil mit einem Träger, auf dem ein Reibbelag angeordnet ist und eine Reibbaugruppe, insbesondere Kupplung oder Bremse, mit zumindest einem Reibbauteil.

In herkömmlichen, trocken laufenden Antriebssystemen von Kraftfahrzeugen werden harzgebundene Reibbeläge eingesetzt. Beispielsweise beschreibt die DE 29 24 540 A ein Produkt zur Herstellung von Bauelementen mit metallischer Zusammensetzung, das durch mindestens ein feines Stahlfaserpulver gebildet ist. Dieses fasrige Pulver wird für einen Reibbelag für Bremsen in einem Anteil von 30 bis 85 Gew.-% verwendet. Die Reibbelag enthält zwischen 10 und 20 % polymerisierbares Phenolbindemittel.

Diese Materialien zeichnen sich durch eine geringe Neigung zu Reibschwingungen (z.B. Kupplungsrupfen) aus, können aber vor allem aufgrund der verwendeten Matrixrohstoffe, also des Harzes, nur bei sehr geringen Temperatur- und Energiebelastungen eingesetzt werden.

Moderne Antriebsstränge sollen bei immer geringerem Gewicht höhere Leistungen übertragen können, wobei gleichzeitig der Fahrkomfort und die Treibstoff-Effizienz gesteigert werden sollen. Durch die Forderung, das Fahrzeuggewicht möglichst gering zu halten, wird auch die Baugröße von Kupplungen stark beschränkt. Dies wiederum wirkt sich auf die Belastungen des Reibbelages stark aus, denn geringer Bauraum für die Kupplung bedeutet kleinere Belagflächen, was in höheren Energie- und Temperaturbelastungen des Reibmaterials resultiert.

Die heute bekannten metallischen Reibbeläge hingegen sind allesamt sehr hoch energetisch und thermisch belastbar, haben hohe Reibwerte und geringen Abrieb, neigen aber auch sehr stark zu Reibschwingungen, die den ganzen Antriebsstrang erfassen können und sich somit sehr negativ auf den Fahrkomfort des Fahrzeuges auswirken.

Der Stand der Technik beschreibt weiter Reibbauteile, bei denen der Reibbelag durch Sinterwerkstoffe gebildet ist. So beschreibt zum Beispiel die DE 44 43 666 A einen Bauteil mit Reibflächen zur Reibsynchronisation in Kfz-Schaltgetrieben. Der in dieser DE-A beschriebene Reibflächen-Werkstoff des Bauteils ist eine oberflächlich weitgehend porenfreie Sinterbronze mit das Reibverhalten, die Verschleißfestigkeit und den Schaltkomfort steigernden metallischen und nichtmetallischen Zusätzen in Form von bis zu 6 Gew.-% Zink, bis zu 6 Gew.-% Nickel, bis zu 3 Gew.-% Molybdän, 1 bis 6 Gew.-% SiO₂ und/oder Al₂O₃, wahlweise 0,2 bis 6 Gew.-% Graphit und/oder Molybdändisulfid, wobei den Rest die Bronze bildet bei definierter Teilchengröße im Ausgangspulver. Diese Sinterbronze ist für ölgeschmierte Teile zur Reibsynchronisation im Kfz-Schaltgetrieben vorgesehen.

Die DE 32 32 865 A beschreibt ein Verfahren zur Herstellung eines Reibelementes für eine Kraftwagen- oder Kraftradscheibenbremse. Als Material für den Reibbelag werden Pulver aus Kupfer, Zinn, Blei und Graphit, Siliziumoxid, Aluminiumoxid und Molybdändisulfid verwendet. Es können damit unterschiedlich poröse Reibbeläge hergestellt werden, deren Enddichte im Bereich zwischen 72,6 % und 90,5 % beträgt.

Die EP 2 012 038 A2 beschreibt einen bindemittelfreien, gesinterten Trockenlaufreibbelag mit einem Reibbelagskörper, der eine metallische Matrix, zumindest einen Abrasivstoff und zumindest einen Füllstoff umfasst, wobei der Reibbelagskörper eine Porosität aufweist, die größer als 10 % ist und wobei der Anteil des zumindest einen Abrasivstoffes am Reibbelagskörper maximal 5 Gew.-% ist. In der metallischen Matrix kann zumindest ein Festschmierstoff enthalten sein, der ausgewählt ist aus einer Gruppe umfassend Grafit, Molybdändisulfid, Koks, sowie Mischungen daraus.

Die WO 2018/185944 A1 beschreibt einen gesinterten Reibbelag für Bremsen mit einer Matrix aus 40 - 80 Gew.-% Cu, 2 - 40 Gew-% Fe, 5 - 30 Gew.-% Festschmierstoffe und 1,5 - 30 Gew.-% Abrasivstoffe. Der Festschmierstoffe weisen 5 - 15 Gew.-% Graphit, bis zu 3 Gew.-% hexagonales Bornitrid, bis zu 3 Gew.-% MoS₂ und bis zu 10 Gew.-% jeweils zumindest eines Sulfids von W, Fe, Cr, Cu auf.

Aus der US 2009/236191 A1 ist ein Sinterbremsbelag bekannt, mit einem zylinderförmigen Reibelement aus einem ersten Sinterwerkstoff, der eine äußere Zylinderoberfläche und eine Zylinderhöhe aufweist, sowie mit einem das Reibelement einfassendes Verstärkungselement, das an der äußeren Zylinderoberfläche angeordnet ist und sich zumindest annähernd über die gesamte Zylinderhöhe erstreckt, wobei das Verstärkungselement aus einem weiteren Sinterwerkstoff mit einer metallischen Matrix gebildet ist, in der zumindest ein Abrasivstoff enthalten ist, und der weitere Sinterwerkstoff eine höhere Festigkeit aufweist als der erste Sinterwerkstoff des Reibelementes. Ein Anteil des Abrasivstoffes kann durch einen Festschmierstoff ersetzt sein. Der Festschmierstoff kann ausgewählt sein aus einer Gruppe umfassend Sulfide, wie Molybdändisulfid, Wolframsulfid, Mangansulfid, Zinnsulfid, Kupfersulfid, sowie Mischungen daraus.

Die US 5,339,931 A beschreibt Bremsklötze zur Verwendung in einem Bremssystem mit einem Rotor aus einer Aluminium-Metallverbundgrundmasse und einem Betätigungsglied, welches beim Ansprechen auf eine Fahrteingabe die Bremsklötze in Eingriff mit dem Rotor aus Aluminium-Metallverbundgrundmasse bringt, um einen Bremsvorgang zu bewirken, in verbesserter Formulierung dieser Bremsklötze zwecks Verhinderung eines Abbaus des Rotors aus Aluminium-Metallverbundgrundmasse und Einstellung eines durchschnittlichen Reibungskoeffizienten von 0,38-0,42 beim Auftreten einer Betriebstemperatur von -40° bis 450°C während eines Bremsvorgangs, wobei diese Zusammensetzung folgendes umfasst:
8-15 Gewichtsprozent Phenolharz zur Festlegung einer Grundmasse für diese Bremsklötze, 5-12 Gewichtsprozent eines organischen Reibungemodifizierers, ausgewählt aus der Kautschukabfälle, Cellulose, Latex, Kork und Cashewnussteilchen umfassenden Gruppe, um durch Entwicklung einer Glasur mit der Oberfläche des Rotors aus Aluminium-Metallverbundgrundmasse bei einem Bremsvorgang stabile Reibung zu schaffen,
1-5 Gewichtsprozent Aramidfasern als anfängliche Verarbeitungshilfe für die Zusammensetzung, und um den Bremsklötzen Verschleißfestigkeit zu verleihen,
4-14 Gewichtsprozent eines kohlenstoffartigen Stoffes, ausgewählt aus der natürlichen Graphit, synthetischen Graphit, Kohlenstoff und Koks umfassenden Gruppe,
4-20 Gewichtsprozent Glasfaser, um den Bremsklötzen Festigkeit zu verleihen,
36-60 Gewichtsprozent anorganische Reibungsmodifizierer, ausgewählt aus der Baryt, Schlämmkreide, Talkum, verwitterten Stein, Vermiculit und Suzoritgummer umfassenden Gruppe, um den Bremsklötzen Festigkeit und stabile Reibung zu verleihen,
2-12 Gewichtsprozent Schleifmittelteilchen, ausgewählt aus der Kieselsäure, Magnesia, Zirkon, Zirkoniumdioxid, Mullit, Aluminiumoxid und Eisenoxide umfassenden Gruppe, um die erwünschte Größe des Reibungskoeffizienten und den für die Bremsklötze erforderlichen Grad stabiler Reibung zu entwickeln,
2-8 Gewichtsprozent eines Schmierstoffes, ausgewählt aus der Molybdänsulfid, Calciumfluorid, Antimontrisulfid und Kryolith umfassenden Gruppe, und
2-18 Gewichtsprozent poröses Kupferpulver zur Unterstützung der Bildung der Glasur zur Verringerung des Verschleißes zwischen dem Aluminiumrotor und den Bremsklötzen bei einem Bremsvorgang.

Aus der JP S60-106932 A ist ein gesintertes Reibmaterial bekannt, das hergestellt ist aus 45-65% Cu-Pulver, 3-8% Sn-Pulver, 3-15% Graphitpulver, 0,5-5% von zumindest einem Pulver aus der Gruppe MoS₂, WS₂, Bi und Sb, 2-15% von zumindest einem Pulver aus der Gruppe Al₂O₃, SiO₂, Mullit, Si₃N₄ und Zirkonsand und 5 bis 30% von zumindest einem Fluorid oder Oxid von Seltenerdelementen wie Ce, La, Y, Sm.

Die JP H09 3564 A beschreibt ein gesintertes Reibmaterial auf Kupferbasis, das u.a. einen Festschmierstoff, wie z.B. Beispiel Graphit, Molybdändisulfid, Bornitrid und Calciumfluorid, enthält.

Aus der US 2018/306263 A1 ist ein Brems- oder Kupplungsbelag bekannt, bestehend aus einer gebundenen Reibbelagmischung, die zumindest eine Faser aufweist, die zumindest einen Festschmierstoff, ausgenommen Graphit, umfasst oder mit zumindest einem Festschmierstoff, ausgenommen Graphit, oberflächenbehandelt, insbesondere beschichtet, ist. Der Festschmierstoff kann ausgewählt sein aus SnS, SnS₂, MoS₂, Bi₂S₃, ZnS, WS₂, FeS, CuFeS₂, CuS, Cu₂S, MnS, Sb₂S₃, TiS₂, Sulfiden von Cr/Co/Ni, Sn₂S₃, MoS₃, WS₃, Fe₁₋ₓS , MnS₂, Sb₂S₅, ZrS₂, CaS, MgS, Sulfiden von La, Ce und mehrphasigen Metallsulfide aus verschiedenen Metallen, BN, PTFE, Phosphaten, Oxiden, oder Mischungen davon.

Aufgabe der Erfindung ist es, einen Reibbelag bzw. ein Reibelement mit geringen Reibschwingungen zur Verfügung zu stellen, der/das einer relativ hohen Temperaturbelastung ausgesetzt werden kann.

Der Umfang der vorliegenden Erfindung ist durch den unabhängigen Anspruch 1 definiert, und weitere Ausführungsformen der Erfindung sind in den abhängigen Ansprüchen 2-7 angegeben.

Überraschenderweise konnte festgestellt werden, dass der Reibbelag eine deutlichere Verbesserung des Reibverhaltens zeigt, als dies aufgrund der Offenbarung der EP 2 012 038 A2, in der ja bereits Festschmierstoffe in einem Reibbelag beschrieben worden sind, zu erwarten wäre. Die Verbesserung betrifft vornehmlich die Reduktion von Schwingungen während des Reibschlusses des Reibbelags mit einer Gegenreibfläche, womit in weiterer Folge eine Stabilisierung des Reibverlaufs und damit eine Reduktion des vorzeitigen Verschleißes des Reibbelages erreicht werden kann. Es wird vermutet, dass diese Verbesserung in dem Einsatz von zumindest zwei verschiedenen Festschmierstoffen aus der im Anspruch 1 genannten Liste begründet ist. Jeder dieser Festschmierstoffe weist in jeweils spezifischen Betriebsbereichen entsprechend gute Eigenschaften auf. Damit kann der Reibbeleg besser an ein umfassendes Lastkollektiv angepasst werden. Der Reibbelag ist damit besser für den Trockenlauf geeignet, also für Betriebsbedingungen ohne die Abfuhr der entstehenden Reibwärme mit einem Öl. Dies wiederum reduziert auch die Schleppmomente, die aufgrund des Einsatzes von Öl entstehen würden. Damit kann die Reibbaugruppe mit geringerem Abstand der Reibbauteile zueinander gebaut werden, womit die Bauraumgröße der Reibbaugruppe reduziert werden kann.

Es ist vorgesehen, dass die Festschmierstoffe durch zumindest zwei Metallsulfide gebildet sind, die Zinn aufweisen. Es können also Mischsulfide eingesetzt werden, in denen Zinn in zumindest zwei verschiedenen Oxidationsstufen vorliegt. Damit konnte das Temperaturverhalten des Reibbelages weiter verbessert werden. Es kann damit aber auch die Materialverträglichkeit der einzelnen Inhaltstoffe der Zusammensetzung des Reibbelags verbessert werden, indem Zinnsulfide als Festschmierstoffe eingesetzt werden, wenn der Reibbelag auch Zinn oder intermetallische Zinnverbindungen enthält.

Zur weiteren Verbesserung der Temperaturdauerbeständigkeit kann nach einer Ausführungsvariante des Reibbelags vorgesehen sein, dass die Festschmierstoffzusammensetzung zusätzlich Grafit enthält.

Im Zuge von durchgeführten Tests konnte gefunden werden, dass es von Vorteil ist, wenn der Gesamtanteil an Festschmierstoffen an dem Reibbelagskörper ausgewählt ist aus einem Bereich von 5 Gew.-% bis 30 Gew.-%, da bei Anteilen an den Festschmierstoffen in diesem Bereich die voranstehend genannten Effekte besonders ausgeprägt sind.

Anhand der bereits angesprochenen Tests konnte weiter gefunden werden, dass es von Vorteil ist, wenn der Reibbelag entsprechend zumindest einer der nachstehenden Ansprüche 2-5 ausgebildet ist:

Zum besseren Verständnis der Erfindung wird diese anhand der nachfolgenden Figuren näher erläutert.

Es zeigen jeweils in vereinfachter, schematischer Darstellung:
- Fig. 1: einen Ausschnitt aus einem Lamellenpaket einer Reibbaugruppe;
- Fig. 2: eine Reiblamelle;
- Fig. 3: eine Gegenlamelle
- Fig. 4: eine Darstellung der Reibwertgenauigkeit bei einem Reibbelag nach dem Stand der Technik;
- Fig. 5: eine Darstellung der Reibwertgenauigkeit bei einem Reibbelag nach der Erfindung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Sämtliche in dieser Beschreibung genannten Normen beziehen sich auf die zum Anmeldezeitpunkt gegenständlicher Anmeldung letztgültige Fassung, sofern nicht etwas anderes angegeben ist.

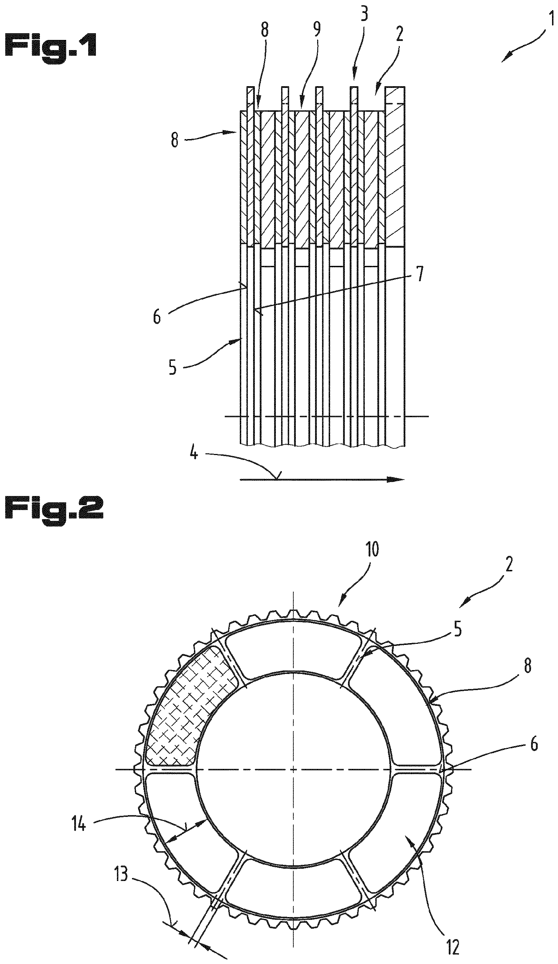

In Fig. 1 ist ein Ausschnitt aus einem Lamellenpaket 1 einer nicht weiter dargestellten Reibbaugruppe dargestellt. Das Lamellenpaket 1 weist zumindest eine Belaglamelle 2, insbesondere mehrere Belaglamellen 2, und zumindest eine Gegenlamelle 3, insbesondere mehrere Gegenlamelle 3, auf, die auch als Reiblamellen bezeichnet werden können. Die Belaglamellen 2 sind in einer Axialrichtung 4 hintereinander abwechselnd mit den Gegenlamellen 3 angeordnet. Über einen entsprechenden Betätigungsmechanismus sind die Belaglamellen 2 relativ zu den Gegenlamellen 3 in der Axialrichtung 4 verstellbar, sodass zwischen den Belaglamellen 2 und den Gegenlamellen 3 ein Reibschluss ausgebildet wird.

In der Ausführungsvariante der Reibbaugruppe mit dem Lamellenpaket 1 nach Fig. 1 sind die Belaglamellen 2 als sogenannte Außenlamellen und die Gegenlamellen 3 als sogenannte Innenlamellen ausgeführt. Deren Ausbildung kann aber auch genau umgekehrt sein, dass also die Belaglamellen 2 die Innenlamellen und die Gegenlamellen 3 die Außenlamellen bilden.

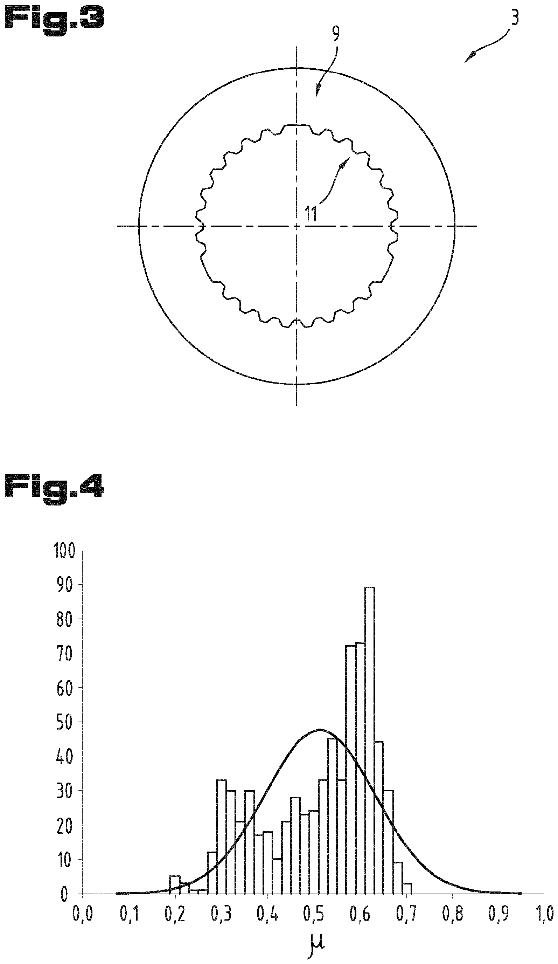

Die Belaglamelle 2 ist besser aus Fig. 2 und die Gegenlamelle 3 besser aus Fig. 3 zu ersehen. Da sämtliche Belaglamellen 2 und /oder sämtliche Gegenlamellen 3 eines Lamellenpakets 1 bzw. einer Reibbaugruppe bevorzugt gleich ausgebildet sind, wird im Folgendem nur mehr auf eine Belaglamelle 2 und eine Gegenlamelle 3 eingegangen. Diese Ausführungen können dementsprechend auf Belaglamellen 2 bzw. Gegenlamellen 3 angewandt werden. Die Anzahl der Belaglamellen 2 und der Gegenlamellen 3 kann generell beispielsweise jeweils ausgewählt sein aus einem Bereich von 1, insbesondere 2, bis 20. Die in Fig. 1 konkret dargestellte Anzahl an Belag- und Gegenlamellen 2, 3 ist also nicht beschränkend zu verstehen.

Die Belaglamellen 2 weist eine zumindest annährend ringförmige Trägerlamelle 5 mit einer ersten Oberfläche 6 und einer dieser in der Axialrichtung 4 gegenüberliegenden zweiten Oberfläche 7 auf. Auf der ersten und/oder der zweiten Oberfläche 6, 7 ist jeweils zumindest ein Reibbelag 8 angeordnet.

Die Gegenlamelle 3 weist einen zumindest annährend ringförmigen Lamellenkörper 9 auf, der allerdings frei von Reibbelägen ist.

Die Belaglamellen 2 weisen an einer radial äußeren Stirnfläche zumindest einen Mitnehmerelement 10, beispielsweise in Form einer Außenverzahnung, auf. Ebenso weisen die Gegenlamellen 3 an einer radial inneren Stirnfläche zumindest ein Mitnehmerelement 11 auf. Über die Mitnehmerelemente 10, 11 kann eine drehfeste Verbindung mit einem weiteren Bauteil der Reibbaugruppe, beispielsweise einer Welle im Fall der Gegenlamellen 2 oder dem Gehäuse der Reibbaugruppe im Fall der Belaglamellen 3, hergestellt werden, wie dies an sich bekannt ist. Es sei noch einmal darauf hingewiesen, dass die Lamellen umgekehrt ausgebildet sein können, also die Belaglamellen 2 die Mitnehmerelemente 11 und die Gegenlamellen 3 die Mitnehmerelemente 10 aufweisen können und dementsprechend auch die drehfeste Verbindung mit dem jeweils anderen Bauteil der Reibbaugruppe hergestellt sein kann.

Dieser prinzipielle Aufbau eines Lamellenpakets 1 ist aus dem Stand der Technik bekannt. Zu weiteren Einzelheiten dazu sei daher auf diesen einschlägigen Stand der Technik verwiesen.

Das Lamellenpaket 1 ist vorzugsweise Teil eines trockenlaufenden Lamellenreibsystems, insbesondere einer trockenlaufenden Lamellenkupplung, einer Bremse, einer Haltebremse, einer Differenzialsperr, etc. Bevorzugt wird das Lamellenpaket 1 in einer Reibbaugruppe eines AWD-Antriebes (All Wheel Drive) oder eines FWD-Antriebes (Front Wheel Drive) eingesetzt. Es sei jedoch darauf hingewiesen, dass der Reibbelag 8 auch in anderen Reibbaugruppen eingesetzt werden kann, die keine Reiblamellen aufweisen. Der Reibbelag 8 kann aber auch in diesen Anwendungen auf einem Träger angeordnet sein und zusammen mit diesem ein Reibbauteil bilden.

Der Reibbelag 8 ist ein vorzugsweise ein massegepresster Trockenlaufreibbelag. Dazu kann aus den Bestandteilen des Reibbelags 8 ein Gemisch hergestellt werden, das in weiterer Folge einem Pressling in einer Presse, gegebenenfalls in einer Heißpresse bei erhöhter Temperatur (z.B. bei einer Temperatur zwischen 100 °C bis 190 °C), gepresst wird.

Gemäß einer Ausführungsvariante kann vorgesehen sein, dass der Reibbelag 8 eine Presssinterreibbelag ist. Der Presssinterreibbelag kann ein Sintermetallbelag sein.

Der Reibbelag 8 kann mittels eines Bandsinterprozess oder mittels Drucksintern oder durch einen DHP-Prozess (Direkt Hot Pressing) hergestellt sein.

Der Reibbelag 8 kann ein Schichtdicke zwischen 0,5 mm und 5 mm aufweisen.

Wie bereits ausgeführt, ist der Reibbelag 8 bevorzugt auf der Trägerlamelle 5 angeordnet. Die Trägerlamelle 5 besteht bevorzugt aus einem Stahl. Es sind aber auch andere eisenbasierte Legierungen einsetzbar. Ebenso können auch kupferbasierte Legierungen, wie z.B. Messing oder Bronze, oder andere metallische Legierungen einsetzbar.

Die Trägerlamelle 5 kann ein Dicke zwischen 0,4 mm und 5,5 mm aufweisen.

Der Reibbelag 8 kann direkt auf der Trägerlamelle 5 angeordnet sein, beispielsweise auf diesen aufgepresst und aufgesintert sein. Es besteht aber auch die Möglichkeit, dass der Reibbelag 8 mit dem Lamellenträger 5 über eine Verbindungsschicht verbunden ist, die zwischen dem Lamellenträger 5 und dem Reibbelag 8 angeordnet wird. Die Verbindungsschicht kann beispielsweise eine Lotschicht, z.B. ein Hartlot auf Basis einer CuSn- oder CuZn-Legierung, oder eine Kleberschicht, z.B. aus organischen und anorganischen Hochtemperaturkleber, sein.

Die Trägerlamelle 5 kann auf nur einer der Oberflächen 6, 7 oder auf beiden Oberflächen 6, 7 (wie dies in Fig. 1 gezeigt ist) zumindest einen Reibbelag 8 aufweisen.

Es ist weiter möglich, dass der Reibbelag 8 als geschlossener, einteiliger Ring ausgeführt ist, sich also ununterbrochen über 360 ° erstreckt. Nach einer anderen Ausführungsvariante kann aber auch vorgesehen sein, dass der Reibbelag 8 segmentiert ist, wie dies in Fig. 2 dargestellt ist. Dargestellt ist dabei ein Reibbelag 8 mit sechs Segmenten 12. Diese Anzahl ist aber nicht limitierend zu verstehen. Insbesondere kann der Reibbelag 8 zwischen zwei und dreißig Segmente 8 aufweisen. Ein Reibbauteil kann aber auch nur ein derartiges Segment 8, das nicht als geschlossener Ring ausgeführt ist, aufweisen. Ebenso sind andere Formen des Reibbelags, z.B. zylinderförmige, quaderförmige, etc., möglich.

Die Segmente 8 sind in Umfangsrichtung der Reiblamelle 8 beabstandet zueinander angeordnet. Dabei kann ein Abstand 13 zwischen 0 mm und 20 mm, insbesondere zwischen 1 mm und 15 mm, betragen.

Ecken und/oder Kanten der Segmente 12 bzw. der Reibbeläge 8 können abgeschrägt oder gerundet ausgeführt sein. Der Rundungsradius kann dabei zwischen 0,5 mm und 6 mm, insbesondere zwischen 1 mm und 4,5 mm, betragen.

Eine radiale Breite 14 des Reibbelags 8 bzw. der Segmente 12 kann ausgewählt sein aus einem Bereich von 5 mm bis 40 mm.

Die durch die Beabstandung der Segmente 12 entstehenden Nuten zwischen den Segmenten 12 können einen rechteckförmigen, quadratischen, trapezförmigen, runden, etc. Querschnitt aufweisen.

Die Gegenlamelle 3 besteht bevorzugt aus einem Stahl. Es sind aber auch andere eisenbasierte Legierungen einsetzbar. Ebenso sind auch kupferbasierte Legierungen, wie z.B. Messing oder Bronze, oder andere metallische Legierungen einsetzbar.

Die Gegenlamelle 3 kann ein Dicke zwischen 0,5 mm und 6 mm aufweisen.

Der Außendurchmesser und der Innendurchmesser der Belaglamellen 2 und der Gegenlamellen 3 kann den entsprechenden Gegebenheiten angepasst sein. Gleiches gilt für das Verhältnis von Außendurchmesser zu Innendurchmesser.

Es kann nach einer anderen Ausführungsvariante weiter vorgesehen sein, dass die Oberfläche des Reibbelags 8 strukturiert ausgeführt ist, wie dies in Fig. 2 strichliert angedeutet ist. Die Strukturierung kann in Form von Nuten, beispielsweise Nuten mit konzentrischem oder radialem Verlauf, Nuten in Form eines trapezförmigen Musters, als Waffelnuten, etc. ausgeführt sein. Ebenso sind auch diskrete Erhöhungen in Form von Noppen oder dgl. als Oberflächenstrukturierung möglich.

Die Oberfläche des Reibbelags 8 kann aber auch pressglatt ausgeführt sein.

Die Tiefe der Nuten der Oberflächenstrukturierung(en) kann ausgewählt sein aus einem Bereich von 0,1 mm bis 2 mm, insbesondere zwischen 0,5 mm und 1,5 mm. Die Breite der Nut (in Umfangsrichtung der Reiblamelle 8) kann ausgewählt sein aus einem Bereich von 1 mm bis 3 mm, insbesondere zwischen 1 mm und 2,5 mm. Die Nuten können einen rechteckförmigen, quadratischen, trapezförmigen, runden, etc. Querschnitt aufweisen. Alle Nuten einer Oberflächenstrukturierung können gleich ausgeführt sein. Es können aber auch unterschiedliche Nuten (Breite, Tiefe, Form) auf einer Oberfläche miteinander kombiniert werden.

Der Reibbelag 8 kann eine Porosität aufweisen, die größer als 10 % ist. Insbesondere kann der Reibbelag 8 eine Porosität aufweisen, die ausgewählt ist aus einem Bereich mit einer unteren Grenze von 15 % und einer oberen Grenze von 40 %. Die Porosität bezeichnet dabei den relativen Anteil das Hohlraumvolumens am Gesamtvolumen des Reibbelags 8. Gemessen kann die Porosität werden mittels Hg-Intrusion und -Extrusion: Porenvolumen nach ISO 15901-1 (DIN 66133).

Zur weiteren Verbesserung der Eigenschaften des Reibbelags 8 kann die Porosität auch ausgewählt sein aus einem Bereich mit einer unteren Grenze von 20 % und einer oberen Grenze von 35 %, insbesondere ausgewählt sein aus einem Bereich mit einer unteren Grenze von 25 % und einer oberen Grenze von 30 %.

Der bindemittelfreie Reibbelag 8 weist einen Reibbelagskörper auf. Bindemittelfrei bedeutet, dass der Reibbelag 8 keine organischen Harze als Bindemittel aufweist. Der Reibbelagskörper weist eine metallischen Matrix, zumindest einen Abrasivstoff, Festschmierstoffe, und gegebenenfalls zumindest einen Füllstoff auf bzw. besteht daraus, wobei sich in letzterem Fall alle Bestandteile des Reibbelagskörpers auf 100 Gew.-% ergänzen.

Der Anteil der metallischen Matrix am Reibbelag 8 ist ausgewählt aus einem Bereich mit einer unteren Grenze von 50 Gew.-% und einer oberen Grenze von 90 Gew.-%. Der Anteil der metallischen Matrix kann weiter ausgewählt sein aus einem Bereich mit einer unteren Grenze von 70 Gew.-% und einer oberen Grenze von 80 Gew.-%.

Vorzugsweise wird für die metallische Matrix zumindest ein Metall oder eine Metalllegierung ausgewählt, das bzw. die eine Härte nach Vickers aufweist, die ausgewählt ist aus einem Bereich von einer unteren Grenze von 30 HV10 und einer oberen Grenze von 80 HV10. Durch Metalle dieser Härte ist es möglich, dass zumindest ein Teil der abrasiven Wirkung des Reibbelages 8 durch die metallische Matrix erhalten wird, insbesondere wenn die metallische Matrix nicht durch Schleifen oder dergleichen nachbehandelt ist um die Oberfläche zu glätten.

Insbesondere kann für die metallische Matrix zumindest ein Metall oder eine Metalllegierung ausgewählt werden, das bzw. die eine Härte nach Vickers aufweist, die ausgewählt ist aus einem Bereich von einer unteren Grenze von 40 HV10 und einer oberen Grenze von 60 HV10.

Die metallische Matrix ist aus zumindest einem Element aus einer Gruppe umfassend Kupfer, Eisen, Zinn, Zink oder Legierungen damit und Mischungen daraus gebildet.

Der Anteil des Abrasivstoffes an dem Reibbelag 8 beträgt maximal 5 Gew.-%.

Der zumindest eine Abrasivstoff ist ausgewählt aus einer Gruppe umfassend, Mullit, Siliziumdioxid, Korund, Glas, Aluminiumoxid (Al₂O₃), sowie Mischungen daraus wobei durch diese Abrasivstoffe eine hohe Abrasivwirkung auch bei derartig geringen Anteilen an Abrasivstoffen erzielt werden kann.

Der Anteil des zumindest einen Füllstoffes am Reibbelag 8 ist ausgewählt aus einem Bereich von einer unteren Grenze von 5 Gew.-% und einer oberen Grenze von 35 Gew.-%. Der Füllstoff ist ausgewählt aus einer Gruppe umfassend Glimmer, Feldspat, Kieselgur oder Mischungen daraus. Insbesondere durch letztere spezielle Füllstoffe im Zusammenspiel mit der hohen Porosität konnten trotz geringer Anteile an Abrasivstoffen hohe Reibwerte erreicht werden.

In der metallischen Matrix sind zumindest zwei unterschiedliche Festschmierstoff enthalten, die ausgewählt sind aus einer Gruppe bestehend aus Metallsulfiden der Metall der Gruppe Wolfram, Eisen, Zinn, Kupfer, Bismut, Antimon, Chrom, Zink, Silber, Mangan, Molybdän und gegebenenfalls hexagonalem Bornitrid, wobei die zumindest zwei unterschiedlichen Festschmierstoffe durch zumindest zwei Metallsulfide gebildet sind, die Zinn aufweisen.
- wozu der Reibbelagskörper SnS und SnS₂ als Festschmierstoffe enthält oder
- wozu der Reibbelagskörper SnS, SnS₂, Sn₂S₃ und hexagonales Bornitrid als Festschmierstoffe enthält. Insbesondere kann die Gruppe der Festschmierstoffe auch Sb₂S₃, Bi₂S₃, Cr₂S₃, Cu₂S, CuS, CuFeS₂, FeS, FeS₂, MnS, MoS₂, Ag₂S, WS₂, ZnS enthalten.

Zusätzlich zu diesen Festschmierstoffen kann noch Graphit, insbesondere Naturgraphit bzw. synthetischer Primär- oder Sekundärgraphit, Koks sowie Mischungen daraus enthalten sein. Der Gesamtanteil an Festschmierstoffen in der metallischen Matrix ist ausgewählt aus einem Bereich mit einer unteren Grenze von 5 Gew.-% und einer oberen Grenze von 30 Gew.-%. Insbesondere kann der Gesamtanteil der Festschmierstoffe am Reibbelag 8 ausgewählt sein aus einem Bereich mit einer unteren Grenze von 6 Gew.-% und einer oberen Grenze von 15 Gew.-%, bzw. ausgewählt sein aus einem Bereich mit einer unteren Grenze von 8 Gew.-% und einer oberen Grenze von 10 Gew.-%.

Zinnsulfide können in einem Gesamtanteil zwischen 2 Gew.-% und 7 Gew.-% enthalten sein. Der Gesamtanteil an Eisensulfiden am Reibbelagskörper kann zwischen 1 Gew.-% und 5 Gew.-% betragen.

Der Gesamtanteil an hexagonalem Bornitrid am Reibbelagskörper kann zwischen 1 Gew.-% und 6 Gew.-% betragen. Sofern hexagonales Bornitrid und Grafit enthalten sind, kann das Mengenverhältnis von Grafit zu hexagonalem Bornitrid aus einem Bereich von 3 bis 6 ausgewählt sein.

Es kann auch vorgesehen sein, dass die Festschmierstoffe teilweise natürlichen Ursprungs und teilweise synthetisch hergestellt sind. Dabei ist von Vorteil, wenn ein Mengenverhältnis von natürlichem Festschmierstoff zu synthetischem Festschmierstoff ausgewählt ist aus einem Bereich von 1,5 bis 5. Generell kann der Mengenanteil an synthetischen Festschmierstoffen zwischen 0,5 Gew.-% und 5 Gew.-% betragen.

Die synthetischen Festschmierstoffe sind insbesondere auf Basis von Grafit und auf Basis von Metallsulfiden hergestellt bzw. synthetischer Grafit und synthetische Metallsulfide aus der voranstehend angeführten Gruppe an Metallen.

Im Folgenden sind einige Beispiele für Festschmierstoffzusammensetzungen des Reibbelags 8 angeführt. Sämtliche Angaben zur Zusammensetzung sind Gew.-%.

### Beispiel a.)

2 % bis 6 SnS + 1 % bis 5 % SnS₂, beispielsweise 4 % SnS + 3 % SnS₂

### Beispiel b.)

0,5 % bis 1,5 % SnS + 1 % und 3 % SnS₂ + 0,5-% und 3 % Sn2S3 + 3,5 % und 7,5 % hexagonales Bornitrid, beispielsweise 1 % SnS + 2 SnS₂ + 1,5 % Sn₂S₃ + 5,5 % hexagonales Bornitrid

Mit diesen Festschmierstoffzusammensetzungen wurden die folgenden Beispiele an Reibbelägen 8 hergestellt, die jedoch keinen einschränkenden Charakter haben. Sämtliche Angaben zur Zusammensetzung sind ebenfalls Gew.-% zu verstehen.

### Beispiel 1:

60,0 % Kupfer, 10,0 % Eisen, 15,0 % Feldspat, 1 % SnS + 2 SnS₂ + 1,5 % Sn₂S₃ + 5,5 % hexagonales Bornitrid, 5 % Aluminiumoxid

### Beispiel 2:

60,0 % Kupfer, 14,0 % Eisen, 8,0 % Glimmer, 1 % SnS + 2 SnS₂ + 1,5 % Sn₂S₃ + 5,5 % hexagonales Bornitrid, 3,5 % Naturgrafit, 4,5 % Aluminiumoxid

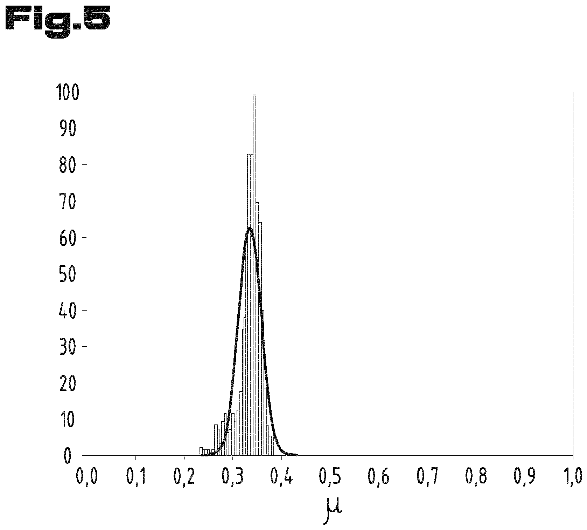

Im Zuge der Validierung der Erfindung wurde unter anderem auch die Reibwertgenauigkeit der Reibbeläge 8 ermittelt. In Fig. 4 ist dazu die Verteilung der Reibwerte für Reibbeläge entsprechend der EP 2 012 038 A2 und in Fig. 5 die Verteilung der Reibwerte für Reibbeläge 8 nach der Erfindung. Dabei sind jeweils auf der Abszisse der Reibwert und auf der Ordinate die Häufigkeit aufgetragen. Es wurden jeweils 708 Proben gemessen.

Wie aus dem Vergleich der beiden Figuren sofort ersichtlich ist, weisen die Reibbeläge 8 nach der Erfindung eine deutlich höhere Reibwertgenauigkeit auf.

Die Ausführungsbeispiele zeigen bzw. beschreiben mögliche Ausführungsvarianten, wobei an dieser Stelle bemerkt sei, dass auch Kombinationen der einzelnen Ausführungsvarianten untereinander möglich sind.

Der Ordnung halber sei abschließend darauf hingewiesen, dass zum besseren Verständnis des Aufbaus der Reibbaugruppe bzw. des Lamellenpakets 1 und der Lamellen diese nicht zwingenderweise maßstäblich dargestellt wurden.

### Bezugszeichenaufstellung

- 1: Lamellenpaket
- 2: Belaglamelle
- 3: Gegenlamelle
- 4: Axialrichtung
- 5: Trägerlamelle
- 6: Oberfläche
- 7: Oberfläche
- 8: Reibbelag
- 9: Lamellenkörper
- 10: Mitnehmerelement
- 11: Mitnehmerelement
- 12: Segment
- 13: Abstand
- 14: Breite

## Patentansprüche

1. Von organischen Harzen als Bindemittel freier, gesinterter Reibbelag (8) mit einem Reibbelagskörper, der aus einer metallischen Matrix, gebildet aus zumindest einem Element aus einer Gruppe umfassend Kupfer, Eisen, Zinn, Zink oder Legierungen damit und Mischungen daraus, zumindest einem Abrasivstoff, ausgewählt sein aus der Gruppe Mullit, Siliziumdioxid, Korund, Glas, Al₂O₃, sowie Mischungen daraus, zumindest zwei unterschiedlichen Festschmierstoffen, und gegebenenfalls zumindest einen Füllstoff, ausgewählt aus der Gruppe Glimmer, Feldspat, Kieselgur, oder Mischungen daraus, besteht, wobei die Festschmierstoffe ausgewählt sind aus einer Gruppe bestehend aus Metallsulfiden der Metall der Gruppe Wolfram, Eisen, Zinn, Kupfer, Bismut, Antimon, Chrom, Zink, Silber, Mangan, Molybdän, und gegebenenfalls hexagonales Bornitrid als Festschmierstoff, und wobei in der Festschmierstoffzusammensetzung gegebenenfalls zusätzlich noch Grafit enthalten ist, wobei der Anteil des Abrasivstoffes an dem Reibbelag (8) maximal 5 Gew.-% beträgt, der Anteil des zumindest einen Füllstoffes am Reibbelag (8) ausgewählt ist aus einem Bereich von einer unteren Grenze von 5 Gew.-% und einer oberen Grenze von 35 Gew.-%, und der Gesamtanteil an Festschmierstoffen an dem Reibbelagskörper ausgewählt ist aus einem Bereich von 5 Gew.-% bis 30 Gew.-%, wobei sich alle Bestandteile des Reibbelags (8) auf 100 Gew.-% ergänzen, **dadurch gekennzeichnet, dass** der Anteil der Matrix am Reibbelag (8) ausgewählt ist aus einem Bereich mit einer unteren Grenze von 50 Gew.-% und einer oberen Grenze von 90 Gew.-%, und dass die zumindest zwei unterschiedlichen Festschmierstoffe durch zumindest zwei Metallsulfide gebildet sind, die Zinn aufweisen,
- wozu der Reibbelagskörper SnS und SnS₂ als Festschmierstoffe enthält, wobei der Anteil an SnS am Reibbelagskörper zwischen 2 Gew.-% und 6 Gew.-% und der Anteil an SnS₂ am Reibbelagskörper zwischen 1 Gew.-% und 5 Gew.-% beträgt, oder
- wozu der Reibbelagskörper SnS, SnS₂, Sn₂S₃ und hexagonales Bornitrid als Festschmierstoffe enthält, wobei der Anteil an SnS am Reibbelagskörper zwischen 0,5 Gew.-% und 1,5 Gew.-%, der Anteil an SnS₂ am Reibbelagskörper zwischen 1 Gew.-% und 3 Gew.-%, der Anteil an Sn₂S₃ am Reibbelagskörper zwischen 0,5 Gew.-% und 3 Gew.-% und der Anteil an hexagonalem Bornitrid am Reibbelagskörper zwischen 3,5 Gew.-% und 7,5 Gew.-% beträgt.

2. Reibbelag (8) nach Anspruch 1, wobei der Gesamtanteil an Zinnsulfiden am Reibbelagskörper zwischen 2 Gew.-% und 7 Gew.-% beträgt.

3. Reibbelag (8) nach Anspruch 1 oder 2, wobei der Reibbelagskörper Eisensulfide als Festschmierstoffe enthält, wobei der Gesamtanteil an Eisensulfiden am Reibbelagskörper zwischen 1 Gew.-% und 5 Gew.-% beträgt.

4. Reibbelag (8) nach einem der Ansprüche 1 bis 3, wobei der Gesamtanteil an hexagonalem Bornitrid am Reibbelagskörper zwischen 1 Gew.-% und 6 Gew.-% beträgt.

5. Reibbelag (8) nach einem der Ansprüche 1 bis 4, wobei der Reibbelagskörper Grafit und hexagonales Bornitrid als Festschmierstoffe enthält, wobei ein Verhältnis von Grafit zu hexagonalem Bornitrid ausgewählt ist aus einem Bereich von 3 bis 6.

6. Reibbauteil mit einem Träger, auf dem ein Reibbelag (8) angeordnet ist, wobei der Reibbelag (8) nach einem der Ansprüche 1 bis 5 ausgebildet ist.

7. Reibbaugruppe, insbesondere Kupplung oder Bremse, mit zumindest einem Reibbauteil, wobei der zumindest eine Reibbauteil nach Anspruch 6 gebildet ist.

## Claims

1. A sintered friction lining (8) free of organic resins as a binder, comprising a friction lining body consisting of a metallic matrix formed of at least one element selected from a group comprising copper, iron, tin, zinc or alloys therewith and mixtures thereof, at least one abrasive selected from the group of mullite, silicon dioxide, corundum, glass, Al₂O₃, and mixtures thereof, at least two different solid lubricants, and optionally at least one filling material, selected from the group of mica, feldspar, kieselguhr, or mixtures thereof, wherein the solid lubricants are selected from a group consisting of metal sulfides of the metals of the group of tungsten, iron, tin, copper, bismuth, antimony, chromium, zinc, silver, manganese, molybdenum, and optionally hexagonal boron nitride as solid lubricant, and wherein the solid lubricant composition optionally additionally contains graphite, wherein the proportion of the abrasive material in the friction lining (8) is at most 5 wt.%, the proportion of the at least one filling material in the friction lining (8) is selected from a range of a lower limit of 5 wt.% and an upper limit of 35 wt.%, and the total proportion of solid lubricants in the friction lining body is selected from a range of 5 wt.% to 30 wt.%, wherein all constituents of the friction lining (8) add up to 100 wt.%, **characterized in that** the proportion of the matrix in the friction lining (8) is selected from a range having a lower limit of 50 wt.% and an upper limit of 90 wt.%, and that the at least two different solid lubricants are formed by at least two metal sulfides comprising tin,
- for which the friction lining body contains SnS and SnS₂ as solid lubricants, wherein the proportion of SnS in the friction lining body amounts to between 2 wt.% and 6 wt.% and the proportion of SnS₂ in the friction lining body amounts to between 1 wt.% and 5 wt.%, or
- for which the friction lining body contains SnS, SnS₂, Sn₂S₃ and hexagonal boron nitride as solid lubricants, wherein the proportion of SnS in the friction lining body amounts to between 0.5 wt.% and 1.5 wt.%, the proportion of SnS₂ in the friction lining body amounts to between 1 wt.% and 3 wt.%, the proportion of Sn₂S₃ in the friction lining body amounts to between 0.5 wt.% and 3 wt.%, and the proportion of hexagonal boron nitride in the friction lining body amounts to between 3.5 wt.% and 7.5 wt.%.

2. The friction lining (8) according to claim 1, wherein the total proportion of tin sulfides in the friction lining body amounts to between 2 wt.% and 7 wt.%.

3. The friction lining (8) according to one of claims 1 or 2, wherein the friction lining body contains iron sulfides as solid lubricants, wherein the total proportion of iron sulfides in the friction lining body amounts to between 1 wt.% and 5 wt.%.

4. The friction lining (8) according to one of claims 1 to 3, wherein the total proportion of hexagonal boron nitride in the friction lining body amounts to between 1 wt.% and 6 wt.%.

5. The friction lining (8) according to one of claims 1 to 4, wherein the friction lining body contains graphite and hexagonal boron nitride as solid lubricants, wherein a ratio of graphite to hexagonal boron nitride is selected from a range of 3 to 6.

6. A friction component having a carrier on which a friction lining (8) is arranged, wherein the friction lining (8) is formed according to one of claims 1 to 5.

7. A friction assembly, in particular a clutch or a brake, having at least one friction component, wherein the at least one friction component is formed according to claim 6.

## Revendications

1. Garniture de friction (8) frittée exempte de résines organiques utilisées comme liant, avec un corps de garniture de friction constitué d'une matrice métallique formée d'au moins un élément issu d'un groupe comprenant le cuivre, le fer, l'étain, le zinc ou des alliages et mélanges de ceux-ci, au moins une substance abrasive choisie dans le groupe comprenant mullite, silice, corindon, verre, Al₂O₃, ainsi que des mélanges de ceux-ci, au moins deux lubrifiants solides différents et éventuellement au moins une charge choisie dans le groupe comprenant le mica, le feldspath, la terre de diatomées ou des mélanges de ceux-ci, dans laquelle les lubrifiants solides sont choisis dans un groupe constitué des sulfures métalliques d'un métal du groupe du tungstène, du fer, de l'étain, du cuivre, du bismuth, de l'antimoine, du chrome, du zinc, de l'argent, du manganèse, du molybdène et éventuellement du nitrure de bore hexagonal utilisé comme lubrifiant solide, et dans laquelle la composition de lubrifiant solide peut également contenir éventuellement du graphite, dans laquelle la proportion de l'abrasif dans la garniture de friction (8) est au maximum de 5 % en poids, la proportion de la au moins une charge dans la garniture de friction (8) est choisie à l'intérieur d'une plage présentant une limite inférieure de 5 % en poids et une limite supérieure de 35 % en poids, et la proportion totale de lubrifiants solides dans le corps de garniture de friction est choisie à l'intérieur d'une plage comprise entre 5 % et 30 % en poids, dans laquelle tous les composants de la garniture de friction (8) se cumulent pour parvenir à 100 % en poids, **caractérisée en ce que** la proportion de la matrice dans la garniture de friction (8) est choisie à l'intérieur d'une plage présentant une limite inférieure de 50 % en poids et une limite supérieure de 90 % en poids, et **en ce que** les au moins deux lubrifiants solides différents sont constitués d'au moins deux sulfures métalliques contenant de l'étain,
- à cette fin, le corps de garniture de friction contient du SnS et du SnS₂ utilisés comme lubrifiants solides, dans laquelle la proportion de SnS dans le corps de garniture de friction est comprise entre 2 % en poids et 6 % en poids et la proportion de SnS₂ dans le corps de garniture de friction est comprise entre 1 % en poids et 5 % en poids, ou
- à cette fin, le corps de garniture de friction contient du SnS, du SnS₂, du Sn₂S₃ et du nitrure de bore hexagonal utilisés comme lubrifiants solides, dans laquelle la proportion de SnS dans le corps de garniture de friction est comprise entre 0,5 % en poids et 1,5 % en poids, la proportion de SnS₂ dans le corps de garniture de friction est comprise entre 1 % en poids et 3 % en poids, la proportion de Sn₂S₃ dans le corps de garniture de friction est comprise entre 0,5 % en poids et 3 % en poids et la proportion de nitrure de bore hexagonal dans le corps de garniture de friction est comprise entre 3,5 % en poids et 7,5 % en poids.

2. Garniture de friction (8) selon la revendication 1, dans laquelle la proportion totale de sulfures d'étain dans le corps de garniture de friction est comprise entre 2 % et 7 % en poids.

3. Garniture de friction (8) selon la revendication 1 ou 2, dans laquelle le corps de garniture de friction contient des sulfures de fer utilisés comme lubrifiants solides, dans laquelle la proportion totale de sulfures de fer dans le corps de garniture de friction est comprise entre 1 % et 5 % en poids.

4. Garniture de friction (8) selon l'une quelconque des revendications 1 à 3, dans laquelle la proportion totale de nitrure de bore hexagonal dans le corps de garniture de friction est comprise entre 1 % en poids et 6 % en poids.

5. Garniture de friction (8) selon l'une quelconque des revendications 1 à 4, dans laquelle le corps de garniture de friction contient du graphite et du nitrure de bore hexagonal utilisés comme lubrifiants solides, dans laquelle le rapport du graphite sur le nitrure de bore hexagonal est choisi dans une plage comprise entre 3 à 6.

6. Composant de friction comprenant un support sur lequel est agencée une garniture de friction (8), dans lequel la garniture de friction (8) est réalisée selon l'une quelconque des revendications 1 à 5.

7. Module de friction, en particulier embrayage ou frein, comprenant au moins un composant de friction, dans lequel le au moins un composant de friction est formé selon la revendication 6.
